# EUROPÄISCHE PATENTSCHRIFT

(11) **EP 0 776 931 B1**
(45) Veröffentlichungstag und Bekanntmachung des Hinweises auf die Patenterteilung: **18.07.2001**
(21) Anmeldenummer: 96118576.6
(22) Anmeldetag: 20.11.1996
(51) Int. Cl.: C08K 3/32

(54) **Farb- und witterungsstabile Schlagzäh-Formmassen auf Basis Polymethylmethacrylat und Verfahren zu ihrer Herstellung**
Colour and weatherproof impact moulding compositions based on polymethylmethacrylate and process for their preparation
Masses à mouler résistantes aux chocs à base de polyméthylméthacrylate stables aux intempéries et aux couleurs et procédé de leur préparation

(30) Priorität: 30.11.1995 DE 19544563
(43) Veröffentlichungstag der Anmeldung: 04.06.1997
(73) Patentinhaber: Röhm GmbH & Co. KG, 64293 Darmstadt (DE)
(72) Erfinder: Numrich, Uwe, Dr.-Ing., 64331 Weiterstadt (DE); Wicker, Michael, Dr., 64342 Seeheim-Jugenheim (DE); Rhein, Thomas, Dr., 55271 Stadecken-Elsheim (DE); Süfke, Thoma, Dr., 64390 Erzhausen (DE)

(56) Entgegenhaltungen:
- EP-A- 0 187 715
- EP-A- 0 465 049
- DE-A- 4 417 559
- US-A- 5 063 259

## Beschreibung

### Gebiet der Erfindung

Die Erfindung betrifft das Gebiet der Formmassen, insbesondere von hochtransparenten, schlagzähen Produkten auf Basis Polymethylmethacrylat (PMMA), die bei thermischer Belastung weitgehend farbstabil und außerdem wasserfest und witterungsstabil sind. Die Herstellung erfolgt nach einem mehrstufigen Extruderverfahren.

### Stand der Technik

Formteile aus Polymethylmethacrylat (PMMA) zeichnen sich durch hervorragende Transparenz und gute Witterungsbeständigkeit aus. Ihr Nachteil, nämlich ziemlich spröde zu sein, wird inzwischen durch eine ganze Reihe von Schlagzähmodifikationen umgangen. Dabei wird in die PMMA-Matrix in disperser Form eine Zähphase eingebettet. Diese soll nach Möglichkeit den gleichen Brechungsindex wie die Matrix besitzen, sowie die Phasengrenze nicht sichtbar werden lassen, um eine mit PMMA vergleichbare Transparenz erzielen zu können. Die vorteilhafteste Methode zur Herstellung transparenter, schlagzäher Formmassen ist die der Kombination der PMMA-Matrix mit einer Latex-Dispersion mit Kern/Schale-Aufbau. Die Dispersionsteilchen bestehen in der Regel aus einer harten, vernetzten Kemphase, auf die eine weiche, ebenfalls vernetzte Schale aufgepfropft ist. Um diese Dispersionsteilchen mit der umgebenden Matrix verträglich zu machen, wird darauf noch eine weitere Schale aufpolymerisiert. Solche schlagzähe Formmassen sind aus US-A 3 808 180 und US-A 3 843 753 bekannt, die bei geeigneter Wahl der Komponenten transparent sein können. Das US-Patent 5 216 082 spezifiziert darüber hinaus die Teilchengröße und die Uneinheitlichkeit der Kern/Schale-Emulsionsteilchen und erzielt dadurch Formmassen mit geringer Anfälligkeit gegen Trübung oder Verfärbung unter Wärme- und Feuchtigkeitseinwirkung, sowie mit verminderter Neigung zu Weißbruch bei Schlageinwirkung.
Die bisher skizzierten Verfahren der Herstellung von schlagzähen Formmassen bergen einen Nachteil in sich: Die durch Emulsionspolymerisation aus wäßriger Phase gewonnene disperse Zähphase mit dem Kern/Schale-Aufbau enthält herstellungsbedingt eine ganze Reihe von Polymerisationhilfsstoffen wie Emulgatoren, Initiatorreste und Puffersalze. Diese bewirken im fertigen Formkörper ein Vergilben bei thermischer Beanspruchung und verschlechtern die Witterungsbeständigkeit.

Daher wurde in EP-A 465 049 vorgeschlagen, zumindest die vergilbende Wirkung der störenden Nebenprodukte durch Zusatz von reduzierend wirkenden anorganischen Phosphorverbindungen zu unterbinden. Beansprucht wird hier der Zusatz von Natriumhypophosphit in einer Menge von 50 bis 1000 ppm bezogen auf die eingesetzte wäßrige Latex-Dispersion. Sie wird hier als "Emulsion" bezeichnet. Das Reagens wird der Emulsion ausdrücklich vor der Compoundierung mit dem Matrixpolymerisat zugesetzt. Es entfaltet seine Wirkung somit vorwiegend bei der Isolierung des Polymerisats aus der wäßrigen Phase. Das in der Emulsion enthaltene Wasser wird nach der Zugabe der reduzierend wirkenden anorganischen Phosphorverbindung durch Trocknen, insbesondere durch Sprühtrocknen, oder durch Koagulation mit Salzen, Säuren oder Methanol entfernt. Es werden dabei keine Überlegungen angestellt oder Maßnahmen genannt, wie die oben genannten, in der Wasserphase der Dispersion gelösten Polymerisationshilfsstoffe, die hier als Verunreinigungen wirken, möglichst quantitativ zu entfernen sind. Im Fall des Sprühtrocknens der Latex-Dispersion verbleiben die Verunreinigungen mitsamt dem zugesetzten Reagens im Polymerisat.

Die in die Formmasse eingeschleppten Verunreinigungen und die relativ hohen Einsatzmengen an reduzierend wirkenden anorganischen Phosphorverbindungen ziehen nach Untersuchungen der Anmelderin einen Nachteil mit sich: Es werden, insbesondere nach einer Heißwasserbehandlung, irreversibel trübe Formkörper erhalten. Der Fachmann spricht von "water whitening". Somit sind die nach der Lehre von EP-A 465 049 hergestellten Produkte in der Beständigkeit der optischen Eigenschaften unter Wassereinwirkung und auch in der Witterungsbeständigkeit unbefriedigend.

In EP-A 0 465 049 wird betont, daß es nachteilig ist, die mit der reduzierend wirkenden anorganischen Phosphorverbindung versetzte Emulsion zusammen mit dem Matrixpolymeren erst im Extruder zu entwässern. Diese Vorgehensweise ist als Schmelzekoagulierungsverfahren z.B. in US-A 4 602 083 beschrieben. In EP-A 465 049 wird weiter ausgeführt, daß dieses Verfahren die Entfärbungswirkung einer reduzierend wirkenden, anorganischen Phosphorverbindung wenig zur Wirkung kommen lasse. Die erhaltenen Resultate betreffend die Entfärbung seien inkonsistent mit der eingesetzten Menge an Reagens. Es wird vermutet, daß dabei Farbe und optische Eigenschaften der durch die Schmelzekoagulation erhaltenen Produkte durch andere Faktoren beeinflußt werden, als bei einer Vorgehensweise entsprechend der Lehre von EP-A 465 049. Es besteht somit ein beträchtliches Vorurteil, die reduzierend wirkende anorganische Phosphorverbindung als Entfärbungsmittel beim Schmelzekoagulierungsverfahren zu benützen. Folglich wird auch eine Zugabe des Reagens direkt in den Extruder hier nicht erwogen, auch nicht, die reduzierend wirkende anorganische Phosphorverbindung zu einem späteren Zeitpunkt als vor der Vereinigung mit der Matrix zuzusetzen.

Der Zusatz von nicht oxidierend wirkenden, nicht nucleophilen Erdalkali-Salzen zu einem Latex direkt in den Extruder wird in der US-A 5 063 259 beschrieben. Es werden dabei auch Erdalkalihypophosphite genannt. Die Zugabe des Salzes dient hier allerdings zur Lösung einer anderen Aufgabe, nämlich ausschließlich der Koagulation der Dispersion. Die Zusatzmengen an Salz für die Koagulierung sind entsprechend hoch: 0.05 bis 5% bezogen auf die Dispersion. Niedrigere Salzmengen, die ausschließlich der Entfärbung dienen sollten, werden nicht in Betracht gezogen. Ein Verschmelzen mit einem dem Extruder zugeführten MatrixPolymeren ist nicht geoffenbart. Somit wird hier im Vergleich zur Aussage in EP-A 465 049 eine andere Aufgabe mit anderen Mitteln gelöst.

Es ist seit langem bekannt, durch Koagulation und Entwässerung eines Kunststoff-Latex in einem Extruder eine thermoplastische Kunststoffschmelze zu gewinnen und diese gegebenenfalls gleichzeitig mit einem anderem thermoplastischen Kunststoff zu verschmelzen.

In der DE-OS 44 17 559.0 wird ein Verfahren zur Entwässerung von zweiphasigen Gemischen von thermoplastischen Kunststoffschmelzen mittels eines gegenläufigen Doppelschneckenextruders beschrieben, das insbesondere eine gesteigerte Entwässerungsleistung besitzt. Das Wasser wird in flüssiger Form abgezogen; eine Entfernung des Wassers über die Dampfphase wird weitgehend unterbunden. Dies ist von Vorteil, denn durch das Austragen der Wasserphase überwiegend in flüssiger Form wird zugleich auch die Hauptmenge der darin gelösten Polymerisationshilsfstoffe, wie z.B. Emulgatoren,Initiatoren und Puffersalze, die in der fertigen Formmasse und vor allem in den daraus gewonnenen Formkörpern die optische Qualität negativ beeinflussen, entfernt.

### Aufgabe und Lösung

Der Erfindung lag die Aufgabe zugrunde, schlagzäh modifizierte, hochtransparente und gelbstichfreie Formmassen mit besonders geringer Tendenz zur Gelbfärbung bei thermischer Belastung und mit gleichzeitig verbesserten Witterungseigenschaften, sowie verbesserter Beständigkeit der optischen Eigenschaften unter Wassereinwirkung bereitzustellen. Die optischen Eigenschaften sollten denen von PMMA möglichst nahe kommen. Es sollte ein Verfahren gefunden werden, das einerseits die durch die Wasserphase der Dispersionskomponente eingeschleppten löslichen Verunreinigungen möglichst quantitativ entfernt und dabei andererseits die Wirkung von zugesetzten Entfärbungsmitteln wie die reduzierend wirkenden anorganischen Phosphorverbindungen zu einer nachhaltigen Wirkung kommen läßt.

### Die Aufgabe wurde gelöst durch ein

Verfahren zur Herstellung einer klaren, schlagzäh modifizierten Formmasse FM mit geringer Tendenz zur Vergilbung, aufgebaut aus einem Matrixpolymerisat M, bestehend zu 80 - 100 Gew.-% aus Methylmethacrylat und 20-0 Gew.-% eines niederen Alkylacrylats wie Methyl-, Ethyl-, 2-Ethylhexyl- oder Butylacrylat, und einer darin verteilten dispersen Phase, wobei die Formmasse FM in üblicher Weise Zusatzstoffe wie Trennmittel, UV-Stabilisatoren, UV-Absorber, Antioxydantien, Stabilisatoren zur Verbesserung der thermischen Stabilität und der Witterungsstabilität, sowie Farbstoffe und Farbpigmente enthalten kann,
mit der Schrittfolge, daß in einem Schritt A) eine Latex-Dispersion DS in Wasser mit Kern/Schale Aufbau nach einem mehrstufigen Polymerisationsprozeß hergestellt wird, wobei die erste Polymerstufe aus einem harten Kern mit einem T_{g}-Wert von > 70°C besteht, eine weitere einen T_{g} - Wert < 25 °C hat und die Elastomerphase bildet und im wesentlichen aus Polyacrylat besteht, während mindestens eine weitere Polymerstufe einen Tg-Wert von > 70 °C hat und im wesentlichen aus Polymethacrylat besteht, diese Latex-Dispersion DS in einem Schritt B) in einem ersten Extruder unter Wärmeeintrag und Scherung und unter Zugabe einer Teilmenge der Matrix M₁ in Form einer Schmelze, die 5 bis 90 Gewichtsteile des Feststoffgehalts der Latex-Dispersion DS ausmacht, koaguliert, wobei das enthaltene Wasser bis auf einen Rest von maximal 10 Gew.-% bezogen auf Gesamtfeststoff der hier erhaltenen Mischung abgezogen wird, diese entstandene Schmelzemischung (DS+M₁) in einem Schritt C) in einem zweiten Extruder unter Wärmeeintrag und Scherung mit der Restmenge der Matrix (M₂ = M-M₁), die mehr als 90 Gewichtsteile des Feststoffgehalts der Latex-Dispersion DS ausmacht, compoundiert, wobei das enthaltene Wasser praktisch vollständig abgezogen wird, diese entstandene Schmelzemischung (DS+M₁+M₂) in einem Schritt D) extrudiert, gekühlt und als Formmassen-Endprodukt FM isoliert wird, wobei in an sich bekannter Weise ein
dadurch gekennzeichnet, daß frühestens in Schritt C) der hier vorliegenden Mischung eine oder mehrere, reduzierend wirkende anorganische Phosphor-Verbindungen AP in einer Menge von unter 50 ppm und mindestens 10 ppm bezogen auf die wäßrige Dispersion DS zugesetzt werden, welche ausgewählt sind aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann.

Die Merkmale der Erfindung umfassen somit den chemischen Aufbau des Polymerisats, die Natur der reduzierend wirkenden anorganischen Phosphorverbindungen, die spezielle mehrstufige Extrusionstechnologie und vor allem den Modus der Zugabe, sowie die Einsatzkonzentration der reduzierend wirkenden anorganischen Phosphorverbindung.

### Aufbau der Formmasse FM

Gegenstand der Erfindung ist eine schlagzäh modifizierte, hochtransparente PMMA-Formmasse. Ihre Zusammensetzung und ihr Aufbau allgemein ist aus dem Stand der Technik bekannt, z.B. aus US-A 3 793 402, US-A 3 808 180, US-A 5 216 082 oder US-A 5 270 397 Der bevorzugte Aufbau ist der einer Matrix, bestehend im wesentlichen aus Polymethylmethacrylat, mit einer darin verteilten dispersen Phase mit Kern/Schale-Struktur.

Das Matrixpolymerisat M besteht im wesentlichen aus einer Hartphase mit einer Glastemperatur von über 70°C, bevorzugt über 100°C. Sie ist aufgebaut aus 80-100 Gew.-% eines niederen Alkylmethacrylats, insbesondere Methylmethacrylat und 20-0 Gew.-% eines niederen Alkylacrylats wie z.B. Methylacrylat, Ethylacrylat, 2-Ethylhexylacrylat oder Butylacrylat. Das Matrixpolymerisat M macht 30-95 Gew.-%, bevorzugt 40-90 Gew.-%, besonders bevorzugt 60-80 Gew.-% der erfindungsgemäßen Formmasse FM aus.

Die darin dispergierte Zähphase liegt in der Regel als Kern/Schale-Dispersion vor. Sie hat einen Anteil von 5 bis 70 Gew.-% in der erfindungsgemäßen Formmasse, bevorzugt 10-60 Gew.-%, besonders bevorzugt 20-40 Gew.-% und wird durch ein mehrstufiges Polymerisationsverfahren hergestellt. Es besteht in einer sukzessiven Zudosierung von Monomeren in zeitlich getrennten Stufen in die wäßrige Phase nach dem bekannten Verfahren der Emulsionspolymerisation. Der Wassergehalt der fertigen Dispersion liegt in der Regel bei 50-55 Gew.-% und muß später zur Vereinigung mit dem Matrixpolymeren M entfernt werden.
In der ersten Polymerstufe wird ein harter, vorwiegend aus niedrigen Alkylmethacrylaten aufgebauter Kern mit einem T_{g}-Wert von >70°C hergestellt. Eine weitere Polymerstufe besteht im wesentlichen aus Polyacrylat, hat einen T_{g} - Wert < 25°C und bildet die Elastomerphase, während mindestens eine weitere Polymerstufe einen T_{g}-Wert von >70 °C hat und zum überwiegenden Teil aus Polymethacrylat, insbesondere PMMA besteht. T_{g}-Werte sind in Kirk-Othmer, Encyclopedia of chemical Technology, 3rd edition, Vol.1,p. 387-389 beschrieben. Durch die zeitliche Abfolge der Polymerisationsschritte wird angenommen, daß die Polymerisate der Elastomerphase und der Endstufe schalenförmig um den Kern angeordnet sind. Entsprechend dem Stand der Technik sind sowohl der Kern, als auch die Elastomerphase vernetzt. In der Regel werden bezogen auf die jeweilige Phase 0.1-6 Gew.-%, bevorzugt 0.3-3 Gew.-% Comonomere mit zwei oder mehr Doppelbindungen eingesetzt.

Das Verhältnis der genannten drei Phasen ist folgendermaßen anzusetzen:
5-40 Gew.-% Kernphase
25-75 Gew.-% Zähphase
20-60 Gew.-% äußere Phase
Es ist auch möglich, eine Kern/Schale-Struktur mit mehr als 3 Polymerisationsstufen aufzubauen.

Die Formmasse FM kann entsprechend dem Stand der Technik eine Reihe von Zusatzstoffen, wie Trennmittel, UV-Stabilisatoren, UV-Absorber, Antioxydantien, Stabilisatoren zur Verbesserung der thermischen Stabilität und der Witterungsstabilität, sowie Farbstoffe und Farbpigmente enthalten. Mögliche Zusatzstoffe sind z.B. in EP-A 566 295 auf Seite 2 ab Zeile 4, sowie auf Seite 5, ab Zeile 57 und auf der folgenden Seite 6 angeführt.

### Die reduzierend wirkenden anorganischen Phosphorverbindungen AP

Die reduzierend wirkenden anorganischen Phosphorverbindungen AP enthalten Phosphor in den Oxidationsstufen +1 oder +3. Technisch leicht zugänglich sind hierbei Salze der Phosphinsäure (Hypophosphite) und der Phosphonsäure (sekundäre Phosphite), sowie die freien Säuren selbst. Es spielt dabei keine Rolle, ob die Salze oder die freien Säuren in der ortho- oder der meta-Form oder auch z.B.als Dimere vorliegen.

Verwendbar sind Alkali-, Erdalkali-, Aluminium- und Ammoniumsalze, wobei das Ammoniumion mit bis zu vier C₁-C₄-Alkyl- und/oder C₅-C₈-Cycloalkylgruppen substituiert sein kann.

Organische, reduzierend wirkende Phosphorverbindungen, ausgewählt aus der Gruppe der aliphatischen oder monoarylaliphatischen Ester sind weit weniger wirksam. Dies gilt vor allem für die verschiedenen Antioxidantien des Standes der Technik auf Basis organischer Phosphite.

Besonders effektiv und auch preisgünstig erhältlich ist Natriumhypophosphit. Seine Verwendung ist eine bevorzugte Ausführungsform der Erfindung. Obwohl es laut Literatur thermisch leicht unter Disproportionierung zerfällt, hat es sich für die Zwecke der Erfindung gut bewährt.
Stabiler sind Erdalkalihypophosphite, wie z.B. Calciumhypophosphit.
Auch die Verwendung dieses Salzes ist möglich. Es hat sich nur herausgestellt, daß insbesondere höhere Mengen an Calciumhypophosphit zu Trübungen in der Formmasse bzw. im daraus hergestellten Formkörper führen können.
Es können auch Mischungen verschiedener reduzierend wirkender anorganischer Phosphorverbindungen eingesetzt werden.
Unerwartet im Vergleich zum Stand der Technik betreffend die Verwendung von reduzierenden anorganischen Phosphorverbindungen ist, daß erfindungsgemäß bereits geringste Konzentrationen davon ausreichen. So werden mit weniger als 50 ppm, aber mit wenigstens 10 ppm bezogen auf die wäßrige Latex Dispersion DS bereits eine ausgezeichnete Wirkung erzielt. Im Vergleich zum Stand der Technik, insbesondere mit EP-A 465 049, ist dies eine deutlich niedrigere Einsatzmenge. In EP-A 465 049 werden 50 bis 1000 ppm an reduzierend wirkenden anorganischen Phosphorverbindungen bezogen auf die wäßrige Latex-Dispersion eingesetzt. Die Angabe der Anwendungskonzentration bezogen auf die wäßrige Latex-Dispersion ist ein berechneter Wert und wird in der vorliegenden Erfindung deswegen gewählt, um den Vorteil gegenüber dem Stand der Technik deutlich zu machen. Erfindungsgemäß wird die reduzierend wirkende anorganische Phosphorverbindung nicht der Latex-Dispersion, sondern einer Schmelzemischung enthaltend einen Teil der Matrix zugegeben.

Setzt man die reduzierend wirkende anorganische Phosphorverbindung in einer ihrer Hydratformen ein, so ist das Kristallwasser bei der Berechnung der Einsatzmenge abzuziehen.

Das Wirkungsoptimum der Verhinderung der Gelbfärbung, bzw. der bezüglich der Sicherstellung der Farbstabilität - nur unter diesem Aspekt gesehen - liegt bei Einsatzmengen im Bereich von 10 bis 300 ppm der reduzierend wirkenden anorganischen Phosphorverbindung AP bezogen auf die Formmasse FM. Es hat sich aber überraschend herausgestellt - und diese Tatsache ist aus dem Stand der Technik nicht geläufig - daß hohe Einsatzmengen an reduzierender anorganischer Phosphorverbindung zu einer deutlichen Verschlechterung der optischen Eigenschaften unter Wassereinwirkung führen. So bewirken Einsatzmengen höher als 50 ppm bezogen auf die wäßrige Latex-Diespersion bereits Eigenschaftsverschlechterungen, wie z.B. eine stärkere irreversible Trübung im Polymerisat nach einer Naßlagerung ("water whitening") und eine verschlechterte Witterungsbeständigkeit.

Nach dem Stand der Technik mußte man diesen Nachteil wohl oder übel in Kauf nehmen, denn sonst hätte man auf die Farbstabilität verzichten müssen. Denn nach dem Stand der Technik gemäß EP-A 465 049 werden mindestens 50, bevorzugt 100-200 ppm an reduzierend wirkenden anorganischen Phosphorverbindungen bezogen auf wäßrige Emulsion eingesetzt, um eine gute Farbstabilität zu erzielen. Nach der Lehre der vorliegenden Erfindung wird eine gute Farbstabilität auch bei Einsatzmengen deutlich unter 50 ppm an reduzierend wirkenden anorganischen Phosphorverbindungen bezogen auf wäßrige Latex-Dispersion erreicht. Diesen vorteilhaften Effekt, der neben der Farblosigkeit auch eine gute Beständigkeit der optischen Eigenschaften unter Wassereinwirkung sichert, verdankt die vorliegende Erfindung in erster Linie einem speziellen Verfahrensablauf, insbesondere einem speziellen Zugabemodus.

### Verfahrensablauf

A) Die Herstellung der Dispersion DS in Wasser wurde oben bereits beschrieben. Sie entspricht dem Stand der Technik.
B) Die Aufarbeitung der dispersen Zähphase und ihre anschließende Compoundierung erfolgt erfindungsgemäß in einem zweistufigen Extruderprozeß. Die disperse Zähphase, die als wäßrige Dispersion vorliegt, wird dabei in einem ersten Extruder unter Zugabe eines Teils der Polymermatrix koaguliert und nach dem aus dem Stand der Technik bekannten Schmelzekoagulationsverfahren gemäß DE-OS 44 17 559.0 weitestgehend entwässert. Ein Vorteil dieser Vorgehensweise ist überraschenderweise der, daß durch die Vermischung der Latex-Dispersion DS mit einem Teil des Matrixpolymeren M₁ bei gleichzeitig ablaufender Entwässerung Gelbildungstendenzen unterdrückt werden. Die disperse Phase wird ferner besonders homogen in die Matrix eingearbeitet und die erhaltene Polymerschmelze ist daher besonders leicht entwässerbar. Der Wassergehalt der Polymerschmelze liegt beim Verlassen des ersten Extruders bei unter 10 Gew.-%. Die Menge an eingearbeitetem Matrixpolymeren ist geringer als der Feststoffgehalt der dispersen Phase. Sie liegt in der Regel bei 5-90 Gewichtsteilen, bevorzugt bei 20-70 Gewichtsteilen, besonders bevorzugt bei 40-60 Gewichtsteilen bezogen auf 100 Gewichtsteile Feststoffgehalt der Latex-Dispersion DS.
C) Die in Stufe B) erhaltene Polymerschmelze (DS+M₁) wird in einem zweiten Extruder mit der Restmenge an Matrixpolymeren M₂ vereinigt und unter Entgasungsbedingungen compoundiert. Dieser zweite Extruder kann somit als ein Compoundierextruder mit Entgasungsfunktion beschrieben werden. Das nach Stufe B) noch vorhandene restliche Wasser wird in den Entgasungszonen des Extruders praktisch vollständig entfernt.
   Die Matrixkomponente M₂ umfaßt die Hauptmenge des Matrixpolymeren. Sie macht mehr als 90 Gewichtsteile bezogen auf 100 Gewichtsteile Feststoffgehalt der Latex-Dispersion aus, in vielen Fällen liegt sie bei über 100 Gewichtsteilen. Die Matrixkomponente M₂ wird bevorzugt als Granulat über eine Feststoffseitendosierung oder auch in bereits geschmolzener Form über einen weiteren Extruder in den Schmelzestrom des Compoundierextruders eingeführt. An dieser Stelle kann auch die reduzierend wirkende anorganische Phosphorverbindung gemeinsam mit M₂ eingetragen werden.
D) Die entgaste Polymerschmelze, in der alle Komponenten vereinigt sind (DS+M₁+M₂) wird z.B. in Form eines Stranges extrudiert, gekühlt und geschnitten.

### Zugabemodus der reduzierend wirkenden anorganischen Phosphorverbindungen AP

Ein Grundgedanke der vorliegenden Erfindung ist, die reduzierend wirkenden anorganischen Phosphorverbindungen AP zu einem relativ späten Zeitpunkt der Verarbeitung zuzugeben. Dadurch ist ein vorzeitiger Zerfall des Reagens vermeidbar, und das komplette Reduktionspotential steht zur Verhinderung der Gelbfärbung bei der Coumpoundierung und der weiteren thermoplastischen Verarbeitung zur Verfügung. Dies könnte zur Erklärung dienen, daß das erfindungsgemäße Verfahren mit so geringen Mengen an reduzierend wirkenden anorganischen Phosphorverbindungen erfolgreich ist. Die Zugabe des Reagen serfolgt erfindungsgemäß frühestens in Schritt C) zu einem Zeitpunkt bzw. an einem Ort, an dem das Wasser praktisch vollständig entfernt worden ist, auf jeden Fall unter 1 Gew.-% bezogen auf den Feststoffgehalt der Schmelze abgefallen ist. Die Zugabe erfolgt somit bevorzugt nach der Entgasung der Polymerschmelze. Die thermische Belastung des Materials nach Zugabe des Reagens ist - zeitlich gesehen - sehr gering.

Die Zugabe der reduzierend wirkenden anorganischen Phosphorverbindungen kann gemeinsam mit der Hauptmenge der Matrixkomponente M₂ erfolgen. Dazu muß es vorher damit gemischt werden. Die Vermischung der reduzierenden anorganischen Phosphorverbindung mit dem als Granulat oder als Mahlgut vorliegenden Matrixpolymeren erfolgt üblicherweise zunächst in langsam laufenden Mischaggregaten wie beispielsweise Trommel-, Rhönrad- oder Doppelkammerpflugscharmischern. Die langsam laufenden Mischaggregate bewirken eine Vermischung, ohne daß die Phasengrenzen aufgehoben werden (vgl. Ullmanns Enzyklopädie der technischen Chemie, 4.Auflage, Bd. 2, Seiten 282 bis 311 Verlag Chemie, Weinheim, New York, 1980).

Die reduzierend wirkenden anorganischen Phosphorverbindungen können auch unabhängig von der Hauptkomponente des Matrixpolymeren in Form eines Masterbatches der Schmelze zugeführt werden. Dazu werden sie mit einer geringen Menge des in Teilchenform vorliegenden Matrixpolymeren compoundiert und kontinuierlich in den zweiten Extruder eingetragen. Vorteilhaft wird im Masterbatch gleichzeitig auch ein Bläuungsmittel eingemischt. Dieses besteht in der Regel aus einer Kombination aus blauen und violetten Farbstoffen oder Farbpigmenten.

Es ist angebracht, wenn auch nicht unbedingt notwendig, die erfindungsgemäßen Formmassen mit Bläuungsmitteln auszurüsten. Dabei hat sich gezeigt, daß sehr geringe Mengen bereits ausreichen. Grund ist der von vornherein sehr niedrige Gelbwert der Formmasse, dessen optische Kompensation naturgemäß leicht ist: Es sind nicht mehr 30 ppm, bevorzugt weniger als weniger als 20 ppm bezogen auf Formmasse FM an Bläuungsmitteln notwendig.

Die erfindungsgemäßen anorganischen reduzierenden Phosphorverbindungen AP können, unabhängig ob sie in die Gesamtmenge des Matrixpolymeren M₂ oder in einen Masterbatch eingemischt werden, in fester Form als Pulver appliziert werden.
In der Regel werden sie aber in Lösung appliziert. Meist ist Wasser als Lösungsmittel am besten geeignet. Vorteilhaft werden die reduzierenden Phosphorverbindungen in möglichst konzentrierter Lösung angewandt. Als Richtwert sei eine Konzentration von 50 Gew.-% genannt. Es ist überraschend, daß selbst eine so geringe Menge an reduzierendem Agens, wie es eine konzentrierte Lösung der Phosphorverbindung im ppm-Bereich darstellt, offensichtlich über die gesamte Polymercharge homogen verteilt werden kann. Im Fall von Salzmischungen aus reduzierend wirkenden anorganischen Phosphorverbindungen ist es prinzipiell möglich, die Komponenten der Mischung nacheinander dem Polymeren zuzugeben. In der Regel wird man aber zuerst eine Mischung oder Lösung der Komponenten herstellen und diese in einem Schritt dem Polymeren zusetzen.
Einem Grundprinzip der vorliegenden Erfindung folgend, nämlich einen möglichst späten Zeitpunkt der Zugabe des Reagens zu wählen, kann die Zugabe in weiteren Ausführungsformen auch nach dem Compoundierschritt erfolgen. Möglichkeiten hierzu sind ein Abmischen des fertigen Granulats oder Mahlgutes mit dem Reagens in wäßriger Lösung oder fallweise auch in fester Form, oder ein Abmischen des Granulats mit einem, das Reagens enthaltenden Masterbatch.

### Vorteilhafte Wirkungen der Erfindung

Das Verfahren der Einarbeitung der reduzierenden anorganischen Phosphorverbindung ist erfindungsgemäß ein einzelner, einfacher Verfahrensschritt. Das Verfahren verlangt zwar eine besondere Extrusionsanlage, nämlich eine zweistufige Extrusionsstrecke mit der Möglichkeit zur Schmelzekoagulierung, welche bereits Stand der Technik ist. Bezüglich der Menge und der chemischen Natur der reduzierenden anorganischen Phosphorverbindung AP ist das Verfahren sehr kostengünstig: Es wird nur wenig Stabilisator gebraucht, und gerade im Fall des Natriumhypophosphits ist er besonders preisgünstig.

Die Zuführung eines Teils des Matrixpolymeren bereits bei der Schmelzekoagulation der Dispersion im ersten Extruder hat den verfahrenstechnischen Vorteil einer sehr effektiven Entwässerung. Auch ist dadurch die Bildung von Gelkörpern weitgehend unterbunden.

Besonders wichtig sind die anwendungstechnischen Vorteile. So ist ein erfindungsgemäßer Formkörper, der z.B. durch Spritzguß aus einer schlagzähen Formmasse, die aus dem erfindungsgemäßen Verfahren resultiert, praktisch farblos. Sein Gelbwert oder Yᵢ-Gelbindex - er wird nach DIN 6167 (D65/10) bzw. nach ASTM D 1925 gemessen, wobei die Dicke der Probekörper 3mm beträgt - liegt bei unter 1.5, bevorzugt unter 1. Solch niedere Gelbwerte werden ohne jeden Zusatz von Bläuungsmitteln erreicht. Werden beim Compoundieren Bläuungsmittel zugesetzt, erzielt man sogar Gelbwerte unter 0.5, bevorzugt unter 0.3. Anstelle des Gelbwertes kann auch die Transmission einer spritzgegossenen Scheibe mit den Maßen von 60x45x3 mm zur Charakterisierung der optischen Eigenschaften herangezogen werden. Die Transmission, gemessen nach DIN 5033 (D65/10) einer erfindungsmäßig hergestellten Scheibe liegt nahe dem theoretischen Wert von 92% Transmission, nämlich bei 89 bis 91.5%.

Ein wichtiger Vorteil des erfindungsgemäßen Verfahrens ist die hervorragende Farbstabilität der Formmasse bei Mehrfachverarbeitung zu Formkörpern. Ein Teil des erfindungsgemäßen Materials z.B. das Angußmaterial beim Spritzguß oder die Randabschnitte bei der Extrusion werden üblicherweise rückgeführt und nach Mahlen und Regranulation einer weiteren Formgebung unterworfen. Trotzdem fällt deren Wiedereinarbeitung bezüglich Gelbwert nicht ins Gewicht: Der Gelbwert der erfindungsgemäßen Formmassen und der daraus hergestellten Formkörper nimmt auch bei Mehrfachverarbeitung nicht zu. Die gute Farbstabilität bei Mehrfachverarbeitung wird mit Gehalten von unter 50 ppm, aber mindestens 10 ppm bezogen auf die wäßrige Schlagzäh-Dispersion DS an reduzierend wirkenden anorganischen Phosphorverbindungen erzielt. Letztere Zahlenwerte sind auf die wäßrige Latexdispersion des ersten Schrittes der Herstellung bezogen, um die Vorteile des erfindungsgemäßen Verfahrens sichtbar werden zu lassen.

Die erfindungsgemäß hergestellten Formmassen zeichnen sich durch hohe Witterungsbeständigkeit und Beständigkeit der optischen Qualität unter Feuchteeinwirkung aus. Gerade diese Eigenschaften sind es, die sie vom Stand der Technik abheben. Vorausgesetzt ist dabei, daß der Gehalt an der reduzierend wirkenden anorganischen Phosphorverbindung niedrig ist, nämlich unterhalb von 50 ppm bezogen auf die wäßrige Latexdispersion liegt. Daher sind diese niedrigen Gehalte bevorzugt, denn nur sie erlauben die einzigartige Kombination der Eigenschaften, nämlich hohe Farbstabilität bei gleichzeitig guter Witterungsbeständigkeit und Beständigkeit der optischen Eigenschaften unter Wassereinwirkung.

Die Witterungsbeständigkeit wurde nach dem Xenotest gemäß ISO 4892-2 geprüft. Die Bestrahlungsenergie einer UV-Strahlung von einer Wellenlänge von 300-400 nm nach 5000 Stunden betrug 810 MJ/m². Die globale Bestrahlungsenergie bei einer Wellenlänge von 300-800 nm nach 5000 Stunden betrug 7.13 GJ/m². Die relative Feuchte betrug 65 %. Die Prüftemperatur war auf 35°C eingestellt..Sie entspricht einer Schwarz-Standardtemperatur von ca. 55°C. Der Beregnungs-/Trockenzyklus betrug 18/102 Minuten.

Dabei ergab sich, daß die erfindungsgemäßen Formmassen bzw. die daraus hergestellten Prüfkörper praktisch keine Trübungszunahme mit fortlaufender Testdauer zeigen. Sie liegt auf jeden Fall unter 10 % bezogen auf den Ausgangswert, was der Bereich der Meßgenauigkeit ist. Die Trübung wird als Streulicht fotometrisch nach ASTM D 1003 bestimmt und in % angegeben. Ein übliche Angabe hierfür ist "haze" in %. Gleiches gilt für die Farbstabilität, ausgedrückt als Gelbwert. Der Gelbwert hatte sich nach 5000 Stunden Bewitterungsdauer praktisch nicht verändert. Er lag im Bereich der Meßgenauigkeit, die hier 0.3 absolut beträgt.

Eine scharfe Prüfung auf Beständigkeit der optischen Eigenschaften unter Wassereinwirkung, wobei der Grad des "water whitening" festgestellt wird, ist der sogenannte Kochtest. Dabei werden genormte Prüfkörper wie sie z.B. auch zur Bestimmung des Gelbwerts verwendet werden, 5 Minuten in nahezu kochendes Wasser von 99° C eingelegt. Nach einer Ruhephase von 3 Stunden wird die Resttrübung fotometrisch als Streulicht bestimmt. Das "water whitening" oder "water haze" wird in% angegeben und nach ASTM D 1003 bestimmt.
Dabei zeigte sich, daß an den erfindungsgemäß hergestellten Prüfkörpern nach Durchführung des Kochtests nur eine geringe Trübungszunahme, nämlich unter 15 % festzustellen war.

Die erfindungsgemäßen Formmassen zeigen die genannten anwendungstechnischen Vorteile meist in Kombination. Sie besitzen mindestens 3 der genannten 6 Vorteile, nämlich 1.niederer Gelbwert mit und 2.ohne Bläuungsmittel, 3.Gelbwertstabilität bei Mehrfachverarbeitung, 4.geringe Trübung nach Durchführung des Kochtests, 5. keine Trübungszunahme und 6. keine Gelbwertzunahme nach Durchführung des Xenotests über 5000 Stunden. In der Regel besitzen die erfindungsgemäßen Formmassen 4, meist 5 und bevorzugt alle 6 der genannten Vorteile in Eigenschaftskombination.

### Verarbeitung der Formmassen FM

Die erfindungsgemäßen Formmassen FM werden zu Formkörpern FK verarbeitet. Dazu sind die gebräuchlichen Verfahren der Technik wie Spritzgießen, Extrudieren, Pressen, Sintern, sowie auch andere Formgebungsverfahren geeignet. Der Gestaltung der Formkörper sind keine Grenzen gesetzt.
Die erfindungsgemäßen Formmasssen FM finden insbesondere Anwendung bei der Herstellung optisch anspruchsvoller Formteile. Gerade bei besonders langen Fließwegen und/oder komplizierten Formteilgeometrien sind hohe Verarbeitungstemperaturen notwendig. Die nach dem erfindungsgemäßen Verfahren hergestellten Formmassen sind gegen Vergilben bereits bei der Herstellung stabilisiert.

### BEISPIELE

### Beispiel 1

### Vergleichsbeispiel nach dem Stand der Technik

Dieses Beispiel beschreibt die Herstellung einer an sich bekannten schlagzähen Formmasse nach dem Schmelzekoagulationsverfahren aus DE-OS 44 17 559.0 ohne Zusatz von reduzierend wirkenden anorganischen Phosphorverbindungen.

### Chemischer Aufbau

a) Polymethylmethacrylat-Matrix M hergestellt durch an sich bekannte kontinuierliche Substanzpolymerisation Mittleres Molekulargewicht (Gewichtsmittel) = 110000 Dalton Copolymeres aus 96 Gew.-% Methylmethacrylat und 4 Gew.-% Methylacrylat
b) Latex-Dispersion als Zähphase
   3-stufig aufgebautes Emulsionspolymerisat mit folgender Zusammensetzung:
   1. Stufe: Copolymerisat aus Methylmethacrylat/Ethylacrylat/Allylmethacrylat = 95.7/4.0/0.3
   2. Stufe: Copolymerisat aus Butylacrylat/Styrol/Allylmethacrylat = 82/17/1
   3. Stufe:Copolymerisat aus Methylmethacrylat/Ethylacrylat = 96/4
   Das Massenverhältnis der drei Stufen ist 20 : 45 : 35. Die Latex-Dispersion hat einen Feststoffgehalt von 45 %

Die Herstellung der Formmasse erfolgt bereits erfindungsgemäß in zwei hintereinander geschalteten Extrudern, wobei im ersten Extruder die Latex-Dispersion entwässert wird und mit einer Teilmenge des Matrixpolymeren M₁, das als Schmelze zugeführt wird, vereinigt wird
Im zweiten Extruder, der als Compoundier- und Entgasungsextruder fungiert, erfolgt die Zugabe der Hauptmenge der Polymermatrix M₂ uber eine Seitenbeschickung. Am Ende der Entgasungszonen erfolgt die Zugabe von Bläuungsmitteln über einen Masterbatch. Es werden, bezogen auf die Formmasse
4 ppm Ultramarinblau 31
14 ppm Ultramarinviolett 11
zugesetzt, dann wird die Schmelze zu Strängen extrudiert, gekühlt und geschnitten. Es wird eine granulierte Formmasse erhalten. Sie enthält kein Natriumhypophosphit.
Die Gewichtsmengenverhältnisse DS: M₁ : M₂ sind 81.5 : 24.74 : 38.39. Die Latex-Dispersion setzt sich zusammen aus 44.82 Gewichtsteilen Wasser und 36.68 Gewichtsteilen Feststoff.

### Beispiel 2

### Vergleichsbeispiel nach dem Stand der Technik entsprechend

EP-A 465 049. Es werden 185 ppm Natriumhypophosphit bezogen auf die wäßrige Latex-Dispersion zugegeben. Der chemische Aufbau entspricht sonst dem in Beispiel 1.

Es wird eine Latex-Dispersion DS wie in Beispiel 1 hergestellt, mit 185 ppm Natriumhypophosphit versetzt und sprühgetrocknet. Diese Masse wird gemeinsam mit der gesamten Menge M an Matrixpolymeren in einem Extruder compoundiert. Es wird eine granulierte Formmasse FM erhalten. Sie enthält 150 ppm Natriumhypophosphit.

### Beispiel 3

### Vergleichsbeispiel

Die Formmasse enthält kein Natriumhypophosphit.

Die Herstellung erfolgt gemäß Beispiel 2 mit dem Unterschied, daß Kein Natriumhypophosphit.zugesetzt wird.

### Beispiel 4

### Erfindungsgemäß

Es wird wie in Beispiel 1 gearbeitet mit dem Unterschied, daß 49 ppm Natriumhypophosphit bezogen auf die wäßrige Dispersion DS zugesetzt werden. Das Reagens wird dabei in einem Masterbatch zusammen mit dem Bläuungsmittel gemeinsam mit der Hauptmenge der Polymermatrix über eine Feststoffseitenbeschickung dem Compoundierextruder zudosiert.
Die erhaltene Formmasse enthält 40 ppm Natriumhypophosphit.

### Beispiel 5

### Vergleichsbeispiel

Es wird wie in Beispiel 4 gearbeitet, mit dem Unterschied, daß statt 49 ppm Natriumhypophosphit bezogen auf die wäßrige Latex-Dispersion 123 ppm eingesetzt werden. Die erhaltene Formmasse hat einen Gehalt an Natriumhypophosphit von 100 ppm.

### Beispiel 6

### Vergleichsbeispiel

Es wird wie in Beispiel 4 gearbeitet, mit dem Unterschied, daß statt 49 ppm Natriumhypophosphit bezogen auf die wäßrige Latex-Dispersion 245 ppm eingesetzt werden. Die erhaltene Formmasse hat einen Gehalt an Natriumhypophosphit von 200 ppm.

### Beispiel 7

### Erfindungsgemäß

Es wird wie in Beispiel 4 gearbeitet, mit dem Unterschied, daß statt 49 ppm Natriumhypophosphit bezogen auf die wäßrige Latex-Dispersion 49 ppm Calciumhypophosphit eingesetzt werden. Die erhaltene Formmasse hat einen Gehalt an Calciumhypophosphit von 40 ppm.

### Anwendungstechnische Ergebnisse:

### Gelbwerte

Es wurden runde Probekörper mit einem Durchmesser von 60 mm und einer Dicke von 6.4 mm auf einer Battenfeld 350 - CD - Schneckenspritzgießmaschine bei einer Zylindertemperatur von 285°C und einer Zykluszeit von 250 sec hergestellt. Die Formtemperatur betrug 64°C.

| Beispiel Nr. | Gehalt an Stabilisator | Gelbwert | Lichtdurchlässigkeit |
|---|---|---|---|
| 1 | 0 ppm Natriumhypophosphit | 1.49 | 89.37 % |
| 4 | 40 ppm Natriumhypophosphit | 0.48 | 89.50 % |

Man erkennt, daß die erfindungsgemäße Formmasse einen deutlich niedrigeren Gelbwert besitzt.

### "Water haze"

Es wurden Prüfkörper in den Abmessungen 65 x 40 x 3 mm durch Spritzguß auf einer Battenfeld 350 - CD - Schneckenspritzgießmaschine bei einer Zylindertemperatur von 255°C und einer Werkzeugtemperatur von 50°C hergestellt. Die Zykluszeit betrug 44 sec.

Diese Prüfkörper wurden entsprechend dem "Kochtest" 5 Minuten in einem Wasserbad von 99° C gelagert, dann 3 Stunden ruhen gelassen und dann das "water whitening" oder der "water haze" in % nach ASTM D 1003 bestimmt.

| Beispiel Nr | Stabilisierung | Water-Haze in % |
|---|---|---|
| 1 | 0 ppm Natriumhypophosphit | 7.9 |
| 7 | 40 ppm Calciumhypophosphit | 10.9 |
| 4 | 40 ppm Natriumhypophosphit | 12.5 |
| 5 | 100 ppm Natriumhypophosphit | 15.5 |
| 6 | 200 ppm Natriumhypophosphit | 17.8 |
| 2 | 150 ppm Natriumhypophosphit | 46.4 |

Es ist gut erkennbar, daß mit steigendem Gehalt an Natriumhypophosphit die Trübung unter Wassereinwirkung zunimmt. Besonders stark ist die Trübung , wenn, wie in Beispiel 2 nach dem Stand der Technik, die Polymerisationshilfstoffe der Latex-Dispersion, wie Emulgatoren, Initiatorreste und Puffersalze nicht enfemt worden sind.

### Xenotest

Die Witterungsbeständigkeit wurde nach dem Xenotest gemäß ISO 4892-2 geprüft. Die Bestrahlungsenergie einer UV-Strahlung von einer Wellenlänge von 300-400 nm nach 5000 Stunden betrug 810 MJ/m². Die globale Bestrahlungsenergie bei einer Wellenlänge von 300-800 nm nach 5000 Stunden betrug 7.13 GJ/m². Die relative Feuchte betrug 65 %. Die Prüftemperatur war auf 35°C eingestellt..Sie entspricht einer Schwarz-Standardtemperatur von ca. 55 °C. Der Beregnungs-/Trockenzyklus betrug 18/102 Minuten.

| Beispiel | ppm Natriumhypophosphit | Dauer in h | Lichtdurchlässig-keit | Gelbwert | Haze in % |
|---|---|---|---|---|---|
| 3 | 0 | 0 | 90.7 | 1.6 | 2.0 |
| | | 1000 | 90.1 | 1.5 | 2.9 |
| | | 2500 | 90.3 | 1.9 | 3.4 |
| | | 5000 | 90.1 | 2.3 | 2.9 |
| 2 | 150 | 0 | 90.6 | 0.7 | 1.8 |
| | | 1000 | 86.9 | 2.9 | 10.4 |
| | | 2500 | 83.5 | 5.2 | 8.0 |
| | | 5000 | 85.7 | 4.2 | 4.9 |
| 1 | 0 | 0 | 91.1 | 0.26 | 1.8 |
| | | 1000 | 90.5 | 0.20 | 1.7 |
| | | 2500 | 88.0 | 0.20 | 1.8 |
| | | 5000 | 89.0 | 0.20 | 1.8 |
| 4 | 40 | 0 | 91.4 | o.16 | 1.8 |
| | | 1000 | 90.8 | 0.13 | 1.9 |
| | | 2500 | 89.3 | 0.08 | 1.7 |
| | | 5000 | 89.9 | 0.18 | 1.8 |

Das Ergebnis des erfindungsgemäßen Beispiels 4 ist durchwegs hervorragend bezüglich Gelbwert und Haze. Selbst nach einer Bewitterungsdauer von 5000 Stunden haben sich beide Eigenschaften nicht verschlechtert. Damit unterscheiden sie sich deutlich vom Stand der Technik in den Beispielen 2 und 3. Die relativ hohen Natriumhypophosphitgehalte von Beispiel 2 wirken sich im Vergleich zum Beispiel 4 zusätzlich negativ aus: Trübung und Gelbwert haben besonders stark zugenommen.

### Optische Eigenschaften nach Mehrfachverarbeitung

Die nach den verschiedenen Beispielen erhaltenen Formmassen wurden 2 weiteren Compoundierschritten unterzogen. Die Compoundiertemperatur betrug 240°C. Nach den einzelnen Compoundierschritten wurden jeweils Prüfkörper in den Abmessungen 65 x 40 x 3 mm durch Spritzguß auf einer Battenfeld 350 - CD - Schneckenspritzgießmaschine bei einer Zylindertemperatur von 255°C und einer Werkzeugtemperatur von 50°C hergestellt. Die Zykluszeit betrug 44 sec.

Dabei zeigt sich, daß ohne Natriumhypophosphit bei Mehrfachverarbeitung vor allem der Gelbwert ansteigt. Calciumhypophosphit bewirkt eine stärkere Trübung als Natriumhypophosphit. Bereits eine geringe Natriumhypophosphit-Konzentration (40 ppm) gewährleistet eine farbkonstante Bläuung in Abhängigkeit von der Anzahl der Compoundierschritte. Mit zunehmender Natriumhypophosphit-Konzentration ergibt sich eine nachteilige Transmissionsabnahme.

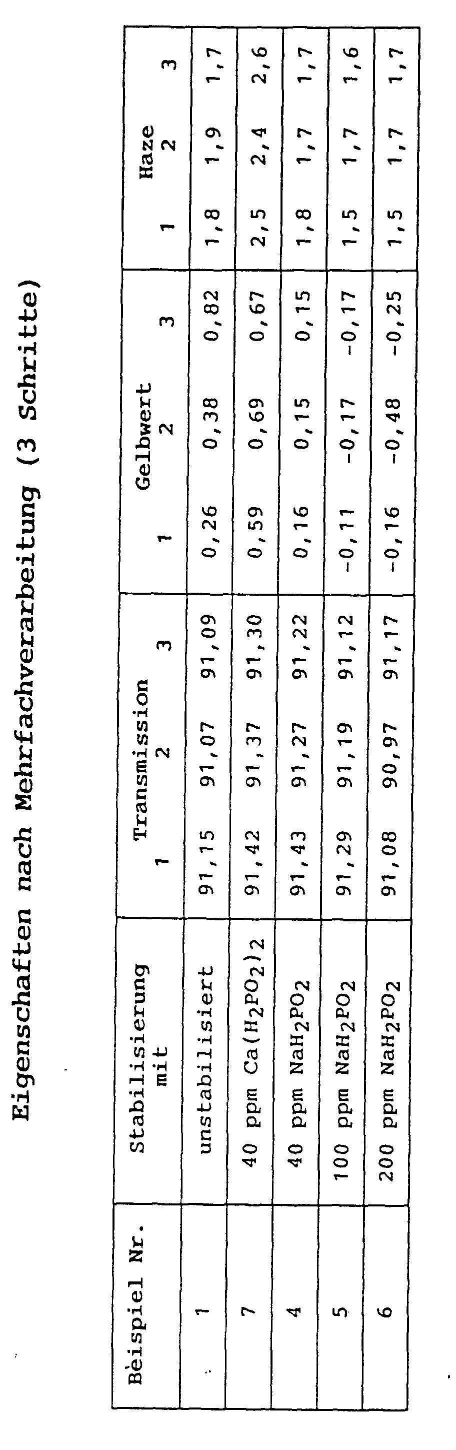

## Patentansprüche

1. Verfahren zur Herstellung einer klaren, schlagzäh modifizierten Formmasse FM mit geringer Tendenz zur Vergilbung, aufgebaut aus einem Matrixpolymerisat M, bestehend zu 80 - 100 Gew.-% aus Methylmethacrylat und 20-0 Gew.-% eines niederen Alkylacrylats wie Methyl-, Ethyl-, 2-Ethylhexyl- oder Butylacrylat, und einer darin verteilten dispersen Phase, wobei die Formmasse FM in üblicher Weise Zusatzstoffe wie Trennmittel, UV-Stabilisatoren, UV-Absorber, Antioxydantien, Stabilisatoren zur Verbesserung der thermischen Stabilität und der Witterungsstabilität, sowie Farbstoffe und Farbpigmente enthalten kann,
mit der Schrittfolge, daß
in einem Schritt A) eine Latex-Dispersion DS in Wasser mit Kern/Schale Aufbau nach einem mehrstufigen Polymerisationsprozeß hergestellt wird, wobei die erste Polymerstufe aus einem harten Kern mit einem T_{g}-Wert von > 70°C besteht, eine weitere einen T_{g} - Wert < 25 °C hat und die Elastomerphase bildet und im wesentlichen aus Polyacrylat besteht, während mindestens eine weitere Polymerstufe einen T_{g}-Wert von > 70 °C hat und im wesentlichen aus Polymethacrylat besteht, diese Latex-Dispersion DS
in einem Schritt B) in einem ersten Extruder unter Wärmeeintrag und Scherung und unter Zugabe einer Teilmenge der Matrix M₁ in Form einer Schmelze, die 5 bis 90 Gewichtsteile des Feststoffgehalts der Latex-Dispersion DS ausmacht, koaguliert, wobei das enthaltene Wasser bis auf einen Rest von maximal 10 Gew.-% bezogen auf Gesamtfeststoff der hier erhaltenen Mischung abgezogen wird, diese entstandene Schmelzemischung (DS+M₁)
in einem Schritt C) in einem zweiten Extruder unter Wärmeeintrag und Scherung mit der Restmenge der Matrix (M₂ = M-M₁), die mehr als 90 Gewichtsteile des Feststoffgehalts der Latex-Dispersion DS ausmacht, compoundiert, wobei das enthaltene Wasser praktisch vollständig abgezogen wird, diese entstandene Schmelzemischung (DS+M₁+M₂) in einem Schritt D) extrudiert, gekühlt und als Formmassen-Endprodukt FM isoliert wird,
dadurch gekennzeichnet, daß
frühestens in Schritt C) der hier vorliegenden Mischung eine oder mehrere, reduzierend wirkende anorganische Phosphor-Verbindungen AP in einer Menge von unter 50 ppm und mindestens 10 ppm bezogen auf die wäßrige Dispersion DS zugesetzt werden, welche ausgewählt sind aus der Gruppe bestehend aus Phosphinsäure und Phosphonsäure und deren Alkalimetall-, Erdalkalimetall- und Aluminium- sowie deren Ammoniumsalzen, wobei das Ammoniumion mit bis zu vier C₁-C₄-Alkyl- und/oder C₅-C₈-Cycloalkylgruppen substituiert sein kann.

2. Verfahren gemäß Anspruch 1, dadurch gekennzeichnet, daß die reduzierend wirkende anorganische Phosphorverbindung AP der Schmelzemischung in einem Stadium der Verarbeitung zugesetzt wird, in dem der Wassergehalt der Schmelze unter 1 Gew.-% bezogen auf den Feststoffgehalt der Formmasse FM liegt.

3. Verfahren gemäß Anspruch 1 oder 2, dadurch gekennzeichnet, daß die reduzierend wirkende anorganische Phosphorverbindung AP in Schritt C) gemeinsam mit der Restmenge des Matrixpolymeren M₂ zugesetzt wird.

4. Verfahren gemäß Anspruch 1 oder 2, dadurch gekennzeichnet, daß die reduzierend wirkende anorganische Phosphorverbindung AP in Schritt C) in Form eines Masterbatch zugesetzt wird

5. Verfahren gemäß Anspruch 1 oder 2, dadurch gekennzeichnet, daß die reduzierend wirkende anorganische Phosphorverbindung AP nach Schritt D) der granulierten oder gemahlenen Formmasse zugesetzt wird.

6. Verfahren gemäß Anspruch 5, dadurch gekennzeichnet, daß die reduzierend wirkende anorganische Phosphorverbindung AP nach Schritt D) der granulierten oder gemahlenen Formmasse als Masterbatch zugesetzt wird.

7. Verfahren gemäß einem oder mehreren der Ansprüche 1 bis 6, dadurch gekennzeichnet, daß die reduzierend wirkende anorganische Phosphorverbindung AP als wäßrige Lösung eingearbeitet wird.

8. Verfahren gemäß einem oder mehreren der Ansprüche 1 bis 6, dadurch gekennzeichnet, daß die reduzierend wirkende anorganische Phosphorverbindung AP in fester Form eingearbeitet wird.

9. Verfahren gemäß einem oder mehreren der Ansprüche 1 bis 8, dadurch gekennzeichnet, daß die reduzierend wirkende anorganische Phosphorverbindung AP Natriumhypophosphit ist.

10. Schlagzäh modifizierte Formmasse erhältlich nach einem Verfahren gemäß einem oder mehreren der Ansprüche 1 bis 10.

11. Formkörper, hergestellt aus der Formmasse FM nach Anspruch 10.

12. Formkörper nach Anspruch 11, dadurch gekennzeichnet, daß der Gelbwert bei wiederholtem Aufschmelzen unverändert bleibt.

13. Formkörper nach Anspruch 11, dadurch gekennzeichnet, daß er nach einer Heißwasserbehandlung bei 99 °C über 5 Minuten einen "Water-haze"-Wert nach ASTM D 1003 von unter 15 % hat.

14. Formkörper nach Anspruch 11, dadurch gekennzeichnet, daß die Formmasse FM ohne Zusatz von Bläuungsmittel hergestellt wurde und der Formkörper einen Gelbwert (nach DIN 6167 (D65/10)) unter 1,5, bevorzugt unter 1,0 hat.

15. Formkörper nach Anspruch 11, dadurch gekennzeichnet, daß die Formmasse FM mit Zusatz von Bläuungsmittel hergestellt wurde und der Formkörper einen Gelbwert (nach DIN 6167(D65/10)) unter 0,5, bevorzugt unter 0,3 hat.

16. Formkörper nach Anspruch 11, dadurch gekennzeichnet, daß die Gelbwertzunahme nach einer Bewitterung nach dem Xenotest (gemäß ISO 4892-2) über 5000 Stunden unter 0.3 liegt.

17. Formkörper nach Anspruch 11, dadurch gekennzeichnet, daß die Zunahme des "haze"-Wertes (nach ASTM D 1003) nach einer Bewitterung nach dem Xenotest (gemäß ISO 4892-2) über 5000 Stunden unter 10% bezogen auf den Ausgangswert liegt.

18. Formkörper nach Anspruch 11, dadurch gekennzeichnet, daß er mindestens 3 der in den Ansprüchen 12 bis 17 genannten Kennzeichen besitzt.

## Claims

1. A process for the production of a clear, impact-resistant modified moulding composition FM with a reduced tendency towards yellowing, made up of a matrix polymerisate M, comprising 80 - 100 wt.-% methylmethacrylate and 20 - 0 wt.-% of a lower alkyl acrylate such as methyl, ethyl, 2-ethylhexyl or butyl acrylate and a dispersed phase distributed therein, wherein the moulding batch FM can contain, in the usual manner, additional materials such as separators, UV stabilisers, UV absorbers, anti-oxidisers, stabilisers to improve thermal stability and weather-resistance and also colouring and colour pigments,
in a sequence so that
a latex dispersion DS in water with a core/shell structure is produced in a step a) after a multistage polymerisation process, wherein the first polymer stage comprises a hard core with a T_{g} value of > 70° C, a further stage has a T_{g} value < 25° C and forms the elastomer phase and substantially comprises polyacrylate, whilst at least one further polymer stage has a T_{g} value of > 70° C and
substantially comprises polymethacrylate, coagulates this latex dispersion DS in a step B) in a first extruder with the addition of heat and shearing and with the addition of a partial quantity of the matrix M₁ in the form of a melt which comprises 5 to 90 parts by weight of the solid content of the latex dispersion DS, wherein the contained water, apart from a residue of a maximum of 10 wt.-%, based on the total solids in the mixture contained here, is drawn off, this resulting melt mixture (DS + M₁), in a step C), is compounded with the residual quantity of the matrix (M₂ = M - M₁) which makes up more than 90 parts by weight of the solid content of the latex dispersion DS, wherein the contained water is practically completely drawn off, this resulting melt mixture (DS+M₁+M₂) is extruded, cooled and isolated as a moulding batch end product FM in a step D),
characterised in that at the earliest in step C) of the mixture which is here present, one or more reducing inorganic phosphorous compounds AP are added in a quantity of less than 50 ppm and at least 10 ppm, based on the aqueous dispersion DS, these being selected from the group comprising phosphinic acid and phosphonic acid and their alkali metal, earth alkali metal and aluminium salts as well as their ammonium salts, wherein the ammonium ion can be substituted with up to four C₁ - C₄ alkyl and/or C₅ - C₈ cycloalkyl groups.

2. A process according to claim 1, characterised in that the reducing inorganic phosphorous compound AP of the melt mixture is added at a stage of processing in which the water content of the melt is below 1 wt.-%, based on the solid content of the moulding composition FM.

3. A process according to claim 1 or 2, characterised in that the reducing inorganic phosphorous compound AP in step C) is added together with the residual quantity of matrix polymer M₂.

4. A process according to claim 1 or 2, characterised in that the reducing inorganic phosphorous compound AP in step C) is added in the form of a master batch.

5. A process according to claim 1 or 2, characterised in that the reducing inorganic phosphorous compound AP in step D) is added to the granulated or milled moulding composition.

6. A process according to claim 5, characterised in that the reducing inorganic phosphorous compound AP in step D) is added to the granulated or milled moulding composition as a master batch.

7. A process according to one or more of claims 1 to 6, characterised in that the reducing inorganic phosphorous compound AP is introduced as an aqueous solution.

8. A process according to one or more of claims 1 to 6, characterised in that the reducing inorganic phosphorous compound AP is introduced in solid form.

9. A process according to one or more of claims 1 to 8, characterised in that the reducing inorganic phosphorous compound AP is sodium hypophosphite

10. An impact-resistant modified moulding composition obtainable according to a process according to one or more of claims 1 to 10.

11. A moulding body, produced from the moulding composition FM according to claim 10.

12. A moulding body according to claim 11,
characterised in that the yellow value remains unchanged in the case of repeated melting.

13. A moulding body according to claim 11,
characterised in that after hot water treatment at 99° C for 5 minutes, it has a "water haze" value according to ASTM D 1003 of less than 15%.

14. A moulding body according to claim 11,
characterised in that the moulding composition FM was produced without the addition of blueing agents and that the moulding body has a yellow value (according to DIN 6167(D65/10)) of less than 1.5, preferably less than 1.0.

15. A moulding body according to claim 11,
characterised in that moulding batch FM was produced with the addition of blueing agents and that the moulding body has a yellow value (according to DIN 6167(D65/10)) of less than 0.5, preferably less than 0.3.

16. A moulding body according to claim 11,
characterised in that the yellow value increase after weathering with the Xeno test (according to ISO 4892-2) for 5000 hours is less than 0.3.

17. A moulding body according to claim 11,
characterised in that the increase of the "haze" value (according to ASTM D 1003) after weathering with the Xeno test (according to ISO 4892-2) for 5000 hours is less than 10%, based on the starting value.

18. A moulding body according to claim 11,
characterised in that it has at least 3 of the characteristics named in claims 12 to 17.

## Revendications

1. Procédé de production d'une masse à mouler modifiée résistant aux chocs claire, FM, à faible tendance au jaunissement, constitué d'un polymère de matrice M, constitué de 80-100 % en poids de méthacrylate de méthyle et de 20-0 % en poids d'un acrylate d'alkyle inférieur comme l'acrylate de méthyle, d'éthyle, de 2-éthylhexyle ou de butyle, et d'une phase dispersée qui y est répartie, la masse à mouler FM pouvant contenir de manière habituelle des additifs comme des agents de séparation, des stabilisateurs UV, des absorbants d'UV, des anti-oxydants, des stabilisateurs pour améliorer la stabilité chimique et la stabilité vis-à-vis des agents atmosphériques, ainsi que des colorants et des pigments,
avec la succession selon laquelle
dans une étape A) on produit une dispersion de latex DS dans l'eau, à constitution noyau/enveloppe, selon un procédé de polymérisation en plusieurs étapes, dans lequel la première étape de polymérisation forme un noyau dur ayant une valeur de T_{g} >70°C, une autre à une valeur de T_{g} < 25°C forme la phase élastomère et se compose essentiellement d'un polyacrylate, tandis qu'au moins un autre niveau de polymère à une T_{g} >70°C se compose essentiellement de poly-méthacrylates, dans une étape B) on coagule cette dispersion de latex DS dans une première extrudeuse avec apport de chaleur et cisaillement et avec addition d'une partie de la matrice M₁ sous la forme d'une masse fondue constituant de 5 à 90 parties en poids de la teneur en solides de la dispersion de latex DS, l'eau contenue étant retirée jusqu'à un résidu d'eau maximum de 10 % en poids par rapport au solide total du mélange ainsi obtenu, dans une étape C) on combine ce mélange fondu apparu (DS + M₁) dans une seconde extrudeuse avec apport de chaleur et cisaillement avec le reste de la matrice (M₂ = M-M₁), qui constitue plus de 90 parties en poids de la teneur en solides de la dispersion de latex DS, l'eau contenue étant retirée pratiquement entièrement, dans une étape D) on extrude ce mélange fondu apparu (DS + M₁ + M₂), on refroidit et on isole sous forme de produit final en masse à mouler FM,
caractérisé en ce que
au plus tôt dans l'étape C) on ajoute au mélange ici présent un ou plusieurs composés de phosphore inorganiques à action réductrice AP en une quantité inférieure à 50 ppm et d'au moins 10 ppm par rapport à la dispersion aqueuse DS, ces composés étant choisis par le groupe composé par l'acide phosphinique et l'acide phosphonique et leurs sels de métaux alcalins, de métaux alcalino-terreux et d'aluminium ainsi que le sel d'ammonium, l'ion ammonium pouvant être substitué par jusqu'à 4 groupes alkyle en C₁ à C₄ et/ou cycloalkyle en C₅ à C₈.

2. Procédé selon la revendication 1,
caractérisé en ce qu'
on ajoute le composé de phosphore inorganique à action réductrice à AP au mélange en fusion à un stade du traitement dans lequel la teneur en eau de la masse fondue est inférieure à 1 % par rapport à la teneur en solides de la masse à mouler FM.

3. Procédé selon la revendication 1 ou 2,
caractérisé en ce qu'
on ajoute le composé de phosphore inorganique à action réductrice AP dans l'étape C) en même temps que le reste du polymère de matrice M₂.

4. Procédé selon la revendication 1 ou 2,
caractérisé en ce qu'
on ajoute le composé de phosphore inorganique à action réductrice AP dans l'étape C) sous la forme d'un lot directeur.

5. Procédé selon la revendication 1 ou 2,
caractérisé en ce qu'
on ajoute le composé de phosphore inorganique à action réductrice AP après l'étape D) à la masse à mouler granulée ou broyée.

6. Procédé selon la revendication 5,
caractérisé en ce qu'
on ajoute le composé de phosphore inorganique à action réductrice AP après l'étape D) à la masse à mouler granulée ou broyée sous forme de lot directeur.

7. Procédé selon une ou plusieurs des revendications 1 à 6,
caractérisé en ce qu'
on introduit le composé de phosphore inorganique à action réductrice AP sous la forme d'une solution aqueuse.

8. Procédé selon une ou plusieurs des revendications 1 à 6,
caractérisé en ce qu'
on introduit le composé de phosphore inorganique à action réductrice AP sous forme solide.

9. Procédé selon l'une ou plusieurs des revendications 1 à 8,
caractérisé en ce que
le composé de phosphore inorganique à action réductrice AP est l'hypophosphite de sodium.

10. Masse à mouler modifiée de façon résiliente que l'on peut obtenir en suivant un procédé selon une ou plusieurs des revendications 1 à 10.

11. Article moulé fabriqué à partir de la masse à mouler selon la revendication 10.

12. Article moulé selon la revendication 11,
caractérisé en ce que
la valeur de jaune reste non modifiée après plusieurs fusions.

13. Article moulé selon la revendication 11,
caractérisé en ce qu'
après un traitement à l'eau chaude à 99°C pendant 5 minutes il a une valeur de "water haze" selon la norme ASTM D 1003 inférieure à 15 %.

14. Article moulé selon la revendication 11,
caractérisé en ce qu'
on fabrique la masse à mouler FM sans addition d'agent de bleuissement et l'article moulé a une valeur de jaune (selon la norme DIN 6167 (D65/10)) inférieure à 1,5, de préférence inférieure à 1,0.

15. Article moulé selon la revendication 11,
caractérisé en ce qu'
on fabrique la masse à mouler FM avec addition d'agent de bleuissement et l'article moulé a une valeur de jaune (selon la norme DIN 6167(D65/10)) inférieure à 0,5, de préférence inférieure à 0,3.

16. Article moulé selon la revendication 11,
caractérisé en ce que
l'accroissement de la valeur de jaune après exposition aux agents atmosphériques selon le xénotest (selon la norme ISO 4892-2) pendant plus de 5000 heures se situe en dessous de 0,3.

17. Article moulé selon la revendication 11,
caractérisé en ce que
l'augmentation de la valeur de "haze" (selon la norme ASTM D 1003) après une exposition aux agents atmosphériques selon le xénotest (selon la norme ISO 4892-2) pendant plus de 5000 heures se situe en dessous de 10 % par rapport à la valeur de départ.

18. Article moulé selon la revendication 11,
caractérisé en ce qu'
il possède au moins 3 des caractéristiques mentionnées dans les revendications 12 à 17.
